# FASCICULE DE BREVET EUROPEEN

(11) **EP 4 204 700 B1**
(45) Date de publication et mention de la délivrance du brevet: **10.04.2024**
(21) Numéro de dépôt: 21840645.2
(22) Date de dépôt: 30.12.2021
(51) Int. Cl.: F16C 19/18, F16C 33/78, F16C 33/80, F16C 33/74, F16C 33/76, F16C 41/00, F16C 17/00

(54) **PALIER LISSE OU À ROULEMENT EQUIPÉ D'UN DISPOSITIF D'ÉTANCHÉITÉ AVEC UN SIÈGE DE JOINT PROCHE DE L'AXE DE RÉVOLUTION**
GLEIT- ODER WÄLZLAGER MIT EINER DICHTUNG MIT EINEM DICHTUNGSSITZ NAHE DER DREHACHSE
SLIDING OR ROLLING BEARING EQUIPPED WITH A SEALING DEVICE WITH A SEAL SEAT CLOSE TO THE AXIS OF ROTATION

(30) Priorité: 29.01.2021 FR 2100908
(43) Date de publication de la demande: 05.07.2023
(73) Titulaire: NTN Europe, 74000 Annecy (FR)
(72) Inventeur: BAUDU, Alexandre, 74010 Annecy Cedex (FR); POURROY-SOLARI, Vincent, 74230 Thônes (FR); RUHLAND, Siegfried, 74010 Annecy Cedex (FR)
(74) Mandataire: Alatis
(86) Numéro de dépôt international: PCT/EP2021/087876
(87) Numéro de publication internationale: WO 2022/161734

(56) Documents cités:
- WO-A1-2008/102579
- JP-A- 2008 138 766
- US-B2- 9 377 055

## Description

### DOMAINE TECHNIQUE DE L'INVENTION

L'invention se rapporte à un palier lisse ou à roulement, et notamment, bien que de manière non exclusive, à un tel palier constituant un roulement de roue de véhicule automobile, préférentiellement un roulement de roue motrice et directrice.

### ÉTAT DE LA TECHNIQUE ANTERIEURE

Les motorisations électriques ou hybrides de certains véhicules automobiles réduisent l'espace disponible pour positionner le bol de transmission des roues motrices, et conduisent à proposer des assemblages dans lesquels une partie au moins du guidage en rotation des roues est en recouvrement avec le bol de transmission, du type décrit par exemple dans la demande française FR2000720, non publiée à ce jour. De tels assemblages nécessitent des roulements de roue de diamètre plus important que les roulements de roue habituellement rencontrés. Pour garantir l'étanchéité de tels roulements, il est nécessaire de prévoir des joints d'étanchéité. À cet effet, on peut naturellement penser à un joint cassette, logé dans un espace situé radialement directement entre la bague intérieure et la bague extérieure. Toutefois, un tel joint d'étanchéité de grand diamètre pose des problèmes qu'il est difficile de résoudre sans faire augmenter le prix de revient de la fonction. En particulier, le joint engendre des frottements entre lèvre de joint et siège, et ces frottements augmentent avec le diamètre, ce qui se répercute négativement sur le couple résistant et sur la température de fonctionnement. Par ailleurs, un joint de grand diamètre exige une précision de montage supplémentaire et des tolérances de fabrication réduites. Enfin, l'insertion d'un joint cassette dans le roulement de roue nécessite deux portées cylindriques en regard l'une de l'autre sur la bague extérieure et la bague intérieure.

Dans le document US 9 377 055 B2 est illustré un roulement de roue équipé d'un dispositif d'étanchéité composé d'un joint cassette conventionnel protégé par un joint à chicane, comportant une structure extérieure solidaire d'une bague extérieure du roulement et positionnée en regard d'une structure intérieure solidaire d'une bague intérieure du roulement, les deux structures intérieure et extérieure étant sans contact l'une avec l'autre. Ici également, l'insertion d'un joint cassette dans le roulement de roue nécessite deux portées cylindriques en regard l'une de l'autre sur la bague extérieure et la bague intérieure.

Dans le document JP2008138766, qui sert de base au préambule de la revendication 1, est décrit un roulement de roue, équipé d'un dispositif d'étanchéité comportant une structure extérieure solidaire d'une bague extérieure du roulement et une structure intérieure solidaire d'une bague intérieure du roulement, la structure extérieure et la structure intérieure délimitant ensemble un volume d'étanchéité, la structure intérieure comportant une portion de frettage frettée sur la portée de frettage de la bague intérieure et au moins un siège de joint, la structure extérieure comportant au moins une lèvre de joint en contact glissant contre le siège de joint, pour obturer le volume d'étanchéité. Le siège de joint est plan et s'étend dans la direction de l'axe de révolution de manière à recouvrir une partie de la face d'extrémité axiale de la bague intérieure. Dans un tel dispositif, le joint et le siège de joint sont directement exposés aux polluants. Le siège de joint, qui tourne avec la bague intérieure, centrifuge les polluants et contribue à les projeter dans la direction du joint, ce qui n'est pas favorable.

Dans le document WO 2008/102 579 A1 est décrit un roulement de roue, équipé d'un dispositif d'étanchéité comportant une structure extérieure solidaire d'une bague extérieure du roulement et une structure intérieure solidaire de la bague intérieure du roulement, la structure extérieure et la structure intérieure délimitant ensemble un volume d'étanchéité ouvert sur un volume intérieur du roulement. La structure intérieure comporte une portion de frettage frettée sur une portée de frettage de la bague intérieure et au moins un siège de joint. La structure extérieure comporte au moins une lèvre de joint en contact glissant contre le siège de joint de manière à obturer le volume d'étanchéité. Le siège de joint comporte une partie cylindrique tournée radialement vers l'extérieur et qui recouvre la portion de frettage, et une portion plane qui s'étend depuis la partie cylindrique dans la direction opposée à l'axe de révolution. La structure obtenue comporte un grand nombre de pièces et son assemblage complexe. De plus, elle n'est pas adaptée à des roulements de roue de grand diamètre, puisque le siège de joint se trouve radialement à l'extérieur de la portée de frettage de la structure intérieure.

### EXPOSE DE L'INVENTION

L'invention vise à remédier aux inconvénients de l'état de la technique et à proposer un palier lisse ou à roulement qui concilie un grand diamètre primitif et une fonction d'étanchéité satisfaisante d'un point des performances techniques et du prix de revient.

Pour ce faire est proposé, suivant un premier aspect de l'invention, un palier lisse ou à roulement comportant au moins une bague intérieure et au moins une bague extérieure, la bague intérieure et la bague extérieure étant aptes à tourner l'une par rapport à l'autre autour d'un axe de révolution du palier, la bague intérieure présentant un chemin de guidage, la bague extérieure présentant au moins un chemin de guidage situé en regard du chemin de guidage de la bague intérieure et délimitant avec le chemin de guidage de la bague intérieure un volume intérieur du palier, la bague intérieure présentant une face d'extrémité axiale tournée dans une direction axiale de référence parallèle à l'axe de révolution, la face d'extrémité axiale étant située axialement à distance du chemin de guidage de la bague intérieure dans la direction de référence, la bague intérieure présentant une portée de frettage située axialement entre la face d'extrémité axiale et le chemin de guidage de la bague intérieure, le palier comportant un dispositif d'étanchéité, le dispositif d'étanchéité comportant au moins une structure extérieure solidaire de la bague extérieure et une structure intérieure solidaire de la bague intérieure, la structure extérieure et la structure intérieure délimitant ensemble un volume d'étanchéité ouvert sur le volume intérieur du palier, la structure intérieure comportant une portion de frettage frettée sur la portée de frettage de la bague intérieure et au moins un siège de joint, la structure extérieure comportant au moins une lèvre de joint en contact glissant contre le siège de joint, le siège de joint et la lèvre de joint obturant le volume d'étanchéité, caractérisé en ce que le siège de joint est situé axialement à distance de la paroi d'extrémité de la bague intérieure dans la direction axiale de référence, et est plus proche de l'axe de révolution que la portée de frettage.

Suivant l'invention, le siège de joint est tourné radialement à l'opposé de l'axe de révolution du palier. La structure intérieure comporte en outre une portion de raccordement en saillie axiale par rapport au siège de joint dans la direction de référence, et un déflecteur, faisant saillie radialement depuis la portion de raccordement dans une direction radiale s'éloignant de l'axe de révolution. Le déflecteur forme avec la structure extérieure un passage en chicane débouchant dans le volume d'étanchéité, le passage en chicane ayant une entrée plus éloignée de l'axe de révolution que le siège de joint, le siège de joint et la lèvre de joint étant positionnés dans le volume d'étanchéité et interposés entre le passage en chicane et le volume intérieur du palier. La géométrie du passage en chicane favorise une centrifugation des polluants susceptible d'y pénétrer.

En plaçant le siège de joint à l'extérieur de la bague intérieure, on peut diminuer le diamètre et la circonférence du siège de joint, et on diminue le couple de frottement entre la lèvre de joint et le siège de joint, ce qui est particulièrement avantageux pour un palier de grand diamètre primitif.

De préférence, le siège de joint est plus proche de l'axe de révolution qu'un fond du chemin de guidage de la bague intérieure.

Suivant un mode de réalisation la portée cylindrique de frettage de la bague intérieure est tournée radialement à l'opposé de l'axe de révolution du palier.

Suivant un mode de réalisation la structure intérieure comporte une armature formant la portion de frettage et le siège de joint.

De préférence, le déflecteur est fixé à l'armature par accrochage, frettage, collage, par des éléments de fixation ou tout autre moyen.

Suivant un mode de réalisation, la structure intérieure comporte une portion d'étanchéité statique venant en appui contre un joint statique destiné à s'interposer entre la structure intérieure et une pièce solidaire de la bague intérieure, notamment un bol de transmission ou un soufflet de protection d'un bol de transmission. Le joint statique permet de protéger la liaison de solidarisation entre la bague intérieure et la pièce sur laquelle elle est montée.

Suivant un mode de réalisation, la structure intérieure comporte un codeur. Le codeur permet de coder une information, notamment de position, lue par un capteur, qui est de préférence stationnaire par rapport à la structure extérieure.

Suivant un mode de réalisation, le chemin de guidage de la bague extérieure est un chemin de roulement, le chemin de guidage de la bague intérieure est un chemin de roulement, le palier étant un palier à roulement comportant au moins une rangée de corps roulants aptes à rouler sur le chemin de roulement de la bague extérieure et le chemin de roulement de la bague intérieure de manière à permettre un mouvement relatif de rotation entre la bague intérieure et la bague extérieure autour de l'axe de révolution. Dans ce contexte, l'invention permet d'augmenter le diamètre primitif du roulement sans impacter négativement le couple résistant du roulement. De préférence, que le siège de joint est plus proche de l'axe de révolution qu'un cercle primitif défini par la rangée de corps roulants. En diminuant ainsi la circonférence du siège de joint, on diminue le couple de frottement du palier.

Suivant un autre aspect de l'invention, celle-ci a trait à un dispositif de support de roue de véhicule automobile, caractérisé en ce qu'il comporte un palier selon l'une quelconque des revendications précédentes, la bague intérieure étant une bague tournante, de préférence un moyeu de roue ou une bague solidaire d'un moyeu de roue et la bague extérieure est une bague fixe présentant une interface de fixation à un support de roue, notamment un pivot de roue.

### BREVE DESCRIPTION DES FIGURES

D'autres caractéristiques et avantages de l'invention ressortiront à la lecture de la description qui suit, en référence aux figures annexées, qui illustrent :
Fig. 1 : une vue en coupe axiale d'un ensemble de support de roue comportant un roulement de roue suivant un premier mode de réalisation de l'invention ;
Fig. 2 : une vue de détail de certains composants du roulement de roue de la figure 1 ;
Fig. 3 : une vue de détail de certains composants d'un roulement de roue suivant un deuxième mode de réalisation de l'invention ;
Fig. 4 : une vue de détail de certains composants d'un roulement de roue suivant un troisième mode de réalisation de l'invention ;
Fig. 5 : une vue de détail de certains composants d'un roulement de roue suivant un quatrième mode de réalisation de l'invention.

Pour plus de clarté, les éléments identiques ou similaires sont repérés par des signes de référence identiques sur l'ensemble des figures.

### DESCRIPTION DETAILLEE DE MODES DE REALISATION

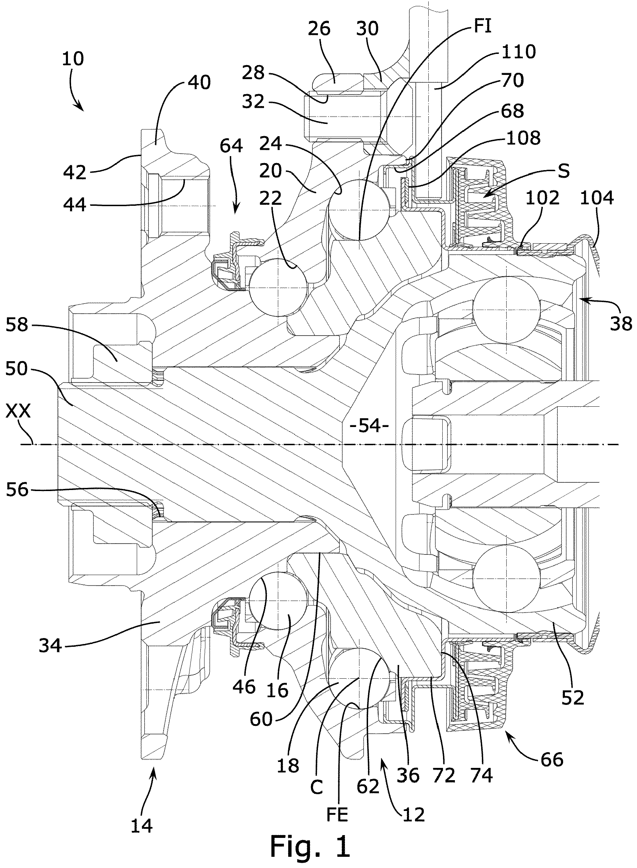

Sur la figure 1 est illustré un palier à roulement constituant un assemblage de roue motrice de véhicule automobile **10,** comportant un sous-ensemble fixe **12,** destiné à être solidarisé à un organe de suspension d'un véhicule automobile (non représenté) et définissant un axe de révolution **XX,** un sous-ensemble tournant **14,** apte à tourner autour de l'axe de révolution **XX** à l'intérieur du sous-ensemble fixe **12,** et des corps roulants de guidage **16, 18** entre le sous-ensemble tournant **14** et le sous-ensemble fixe **12.**

Le sous-ensemble fixe **12** est ici constitué par une bague extérieure métallique massive monobloc **20** sur laquelle sont formés dans ce mode de réalisation deux chemins de roulement extérieurs **22, 24** coaxiaux définissant l'axe de révolution **XX,** l'un des chemins de roulement extérieurs **22** étant destiné à être positionné d'un côté extérieur du véhicule, et l'autre **24** étant destiné à être positionné d'un côté intérieur du véhicule, c'est-à-dire plus proche d'un plan vertical longitudinal médian du véhicule. La bague extérieure comporte en outre au moins une bride de fixation **26** s'étendant radialement vers l'extérieur, dans laquelle sont formés des alésages **28** pour la fixation de la bride de fixation **26** à un organe de suspension **30,** en l'occurrence un pivot de jambe de suspension, par l'intermédiaire d'éléments de fixation **32.**

Le sous-ensemble tournant **14** comporte un moyeu de roue **34** qui forme une bague intérieure de roulement du côté extérieur du véhicule, une deuxième bague intérieure de roulement **36** située du côté intérieur du véhicule et un bol de transmission **38.**

Le moyeu de roue **34** est une pièce métallique massive monobloc, qui comporte un flasque **40** de fixation d'une jante de roue motrice et/ou d'un disque de frein. Le flasque **40** présente une face plane **42** d'appui pour le disque de frein ou la jante de roue, et est pourvu d'alésages de fixation **44,** permettant l'insertion d'éléments de fixation de la jante et/ou du disque de frein. Sur le moyeu de roue **34** est formé un premier chemin de roulement intérieur **46** en regard du premier chemin de roulement extérieur **22.**

Le bol de transmission **38** est une pièce métallique massive monobloc qui, dans ce mode de réalisation, présente une portion saillante d'extrémité **50** pleine et une portion médiane évasée **52** délimitant une cavité **54** de joint homocinétique. La portion saillante **50** du bol de transmission **38** est cannelée et montée libre, ajustée ou frettée dans une cavité tubulaire cannelée **56** du moyeu de roue **34,** formant une interface de contact cannelée. Par ailleurs, on a illustré avec sur la figure 1 des moyens de fixation du bol de transmission **38** et du moyeu de roue **34,** qui mettent en oeuvre un écrou **58** vissé à une extrémité filetée de la portion saillante **50,** et en appui contre un épaulement du moyeu de roue **34.** La bague intérieure de roulement **36** du côté intérieur du véhicule est frettée sur une portée de frettage cylindrique **60** du moyeu de roue **34** et pincée en direction axiale entre le moyeu de roue **34** et le bol de transmission **38.**

Un chemin de roulement intérieur **62** est formé sur la bague intérieure de roulement **36** en regard du chemin de roulement extérieur **24** situé du côté intérieur du véhicule. Les corps roulants **16, 18** forment d'une part une première rangée de corps roulants **16** qui roulent sur le chemin de roulement extérieur **22** et le chemin de roulement intérieur **46** du côté extérieur du véhicule, et d'autre part une deuxième rangée de corps roulants **18** qui roulent sur le chemin de roulement extérieur **24** et le chemin de roulement intérieur **62** du côté intérieur du véhicule.

Ces deux rangées de corps roulants **16, 18** et les chemins de roulement **22, 24, 46, 62** sont protégés par deux dispositifs d'étanchéité, à savoir un dispositif d'étanchéité **64** situé du côté extérieur du véhicule, positionné entre la bague extérieure **20** et le moyeu de roue **34,** et un dispositif d'étanchéité **66** situé du côté intérieur du véhicule, positionné entre la bague extérieure **20** et la bague intérieure de roulement **36.**

Les éléments constitutifs du roulement de roue **10** décrits jusqu'ici sont génériques, et peuvent se présenter sous de multiples variantes. En particulier, on peut envisager que le chemin de roulement intérieur **46** soit formé sur une bague de roulement rapportée sur le moyeu de roue **34.** La bague intérieure **36** du côté intérieur du véhicule peut être fixée au moyeu de roue **34** par une bouterolle et n'avoir le cas échéant aucun contact avec le bol de transmission **38.** La fixation entre le bol de transmission **38** et le moyeu de roue **34** peut être réalisée par tout moyen. Le roulement peut ne comporter qu'une rangée de corps roulants **16,** et ceux-ci peuvent être constitués par des billes ou des rouleaux.

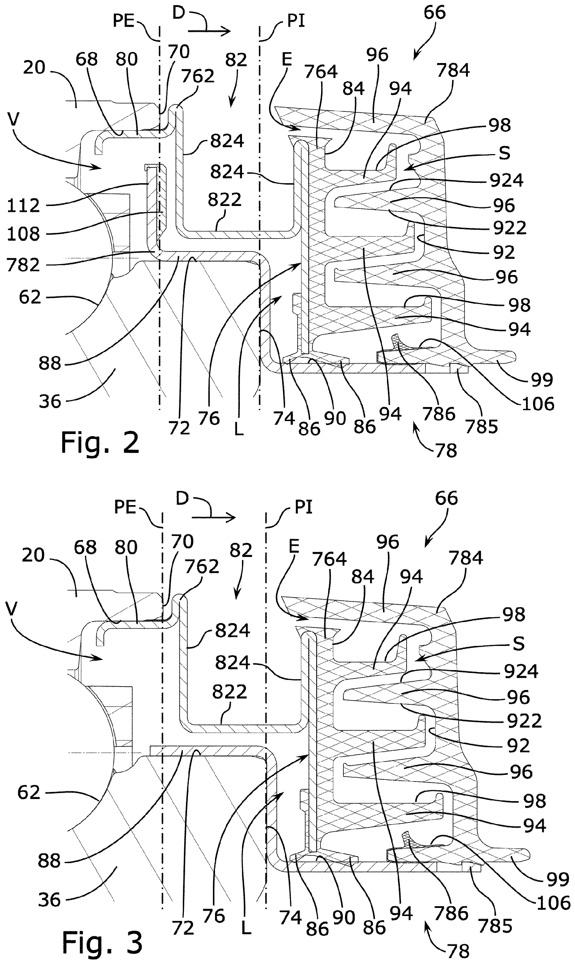

On s'intéressera maintenant plus précisément au dispositif d'étanchéité **66** situé du côté intérieur du véhicule, illustré en détail sur la figure 2, et qui réalise l'étanchéité entre la bague extérieure de roulement **20** et la bague intérieure de roulement **36,** et plus spécifiquement la protection d'un volume **V** situé entre le chemin de roulement **24** de la bague extérieure **20** et le chemin de roulement **62** de la bague intérieure **36.** Dans cette région, la bague extérieure de roulement **20** comporte une portée de frettage **68,** qui est ici cylindrique et tournée vers l'axe de révolution **XX,** et une paroi d'extrémité **70,** qui permet de définir un plan de référence **PE** de la bague extérieure de roulement **20,** perpendiculaire à l'axe de révolution **XX** et tangent à la face d'extrémité **70.** La portée de frettage **68** s'étend, en direction axiale et en direction circonférentielle, dans une zone de la bague extérieure **20** située entre le chemin de roulement **24** situé du côté intérieur du véhicule et la face d'extrémité **70.** La portée de frettage **68** de la bague extérieure est plus éloignée de l'axe de révolution **XX** qu'un cercle primitif **C** de la rangée de corps roulants **18,** et, dans ce mode de réalisation, plus éloignée de l'axe de révolution **XX** qu'un fond de chemin **FE** du chemin de roulement **24** de la bague extérieure **20.**

La bague intérieure de roulement **36** comporte également une portée de frettage **72,** qui est ici cylindrique et tournée radialement vers l'extérieur, et une paroi d'extrémité **74,** qui permet de définir un plan de référence **PI** de la bague intérieure de roulement **36,** perpendiculaire à l'axe de révolution **XX** et tangent à la face d'extrémité **74.** La portée de frettage **72** s'étend, en direction axiale et en direction circonférentielle, dans une zone de la bague intérieure située entre le chemin de roulement **62** situé du côté intérieur du véhicule et la face d'extrémité **74.** La face d'extrémité **74** de la bague intérieure de roulement et la face d'extrémité **70** de la bague extérieure de roulement sont tournées dans une direction commune **D** parallèle à l'axe de référence **XX,** qui sera une direction axiale de référence pour la suite de l'exposé. On constate dans ce mode de réalisation que le plan de référence **PI** de la bague intérieure de roulement **36** est situé à distance du plan de référence **PE** de la bague extérieure de roulement **20** et décalé dans la direction axiale de référence **D,** de sorte que la bague intérieure de roulement **36** est en saillie par rapport à la bague extérieure de roulement **20** dans la direction axiale de référence **D,** et traverse le plan de référence **PE** de la bague extérieure de roulement **20.** Plus spécifiquement, une partie au moins de la portée de frettage **72** de la bague intérieure de roulement **36** est située d'un côté du plan de référence **PE** de la bague extérieure de roulement **20** opposé à la portée de frettage **68** de la bague extérieure de roulement **20.**

Le dispositif d'étanchéité **66** comporte une structure extérieure **76** solidaire de la bague extérieure **20,** et une structure intérieure **78** solidaire de la bague intérieure **36.**

La structure extérieure **76** comporte une portion de frettage **80** frettée sur la portée de frettage **68** de la bague extérieure **20,** et une portion fonctionnelle formant une gouttière **82** ouverte radialement vers l'extérieur, une paroi de chicane **84,** et, dans ce mode de réalisation, deux lèvres de joint **86.** La gouttière **82** comporte un fond **822** et des parois latérales **824,** qui sont situées axialement de part et d'autre du fond et sont plus éloignées de l'axe de révolution que le fond. Dans ce mode de réalisation, la structure extérieure **76** comporte une armature rigide **762,** par exemple en tôle ou en matière plastique, et un surmoulage **764.** L'armature **762** forme la portion de frettage **80** et la gouttière **82,** alors que le surmoulage **764** forme la paroi de chicane **84** et les lèvres de joint **86.**

La structure intérieure **78** comporte une portion de frettage **88** frettée sur la portée de frettage **72** de la bague intérieure **36,** et une portion fonctionnelle formant un siège de joint **90** et une paroi de chicane **92** située en regard de la paroi de chicane **84** de la structure extérieure **76** pour délimiter un passage en chicane **S** entre la structure intérieure **78** et la structure extérieure **76.** Les lèvres de joint **86** sont élastiquement déformables et portent sur le siège de joint **90** qui, dans ce mode de réalisation, est cylindrique. La structure intérieure **78** et la structure extérieure **76** du dispositif d'étanchéité délimitent ensemble un logement annulaire **L** pour le siège de joint **90** et les lèvres de joint **86,** logement dans lequel débouche le passage en chicane **S** et en communication avec le volume interne **V** délimité par le chemin de roulement **24** de la bague extérieure de roulement **20** et par le chemin de roulement **62** de la bague intérieure de roulement **36.**

La portion de frettage **88** et la portion fonctionnelle de la structure intérieure **78** se trouvent de part et d'autre du plan de référence **PI** de la bague intérieure **36.** Il est ainsi possible de positionner le siège de joint **90** à une plus proche distance de l'axe de révolution **XX** que la portion de frettage **88.** Cette disposition vise à minimiser le diamètre du siège de joint **90** et permet de minimiser le couple de frottement entre les lèvres de joint **86** et le siège de joint **90,** et de réduire la chaleur produite par ce frottement.

Le passage en chicane **S** présente une entrée **E** délimitée par une portion d'entrée de la paroi de chicane **84** de la structure extérieure **76** et par une portion d'entrée de la paroi de chicane **92** de la structure intérieure **78.** L'entrée **E** du passage en chicane **S** et la portion de frettage **80** de la structure extérieure **76** sont situées axialement de part et d'autre de la gouttière **82.** Le passage en chicane **S** et la gouttière **82** sont situés d'un même premier côté du plan de référence **PE** de la bague extérieure **20** opposé au côté du plan de référence **PE** ou est située la portion de frettage **80** de la structure extérieure **76.** L'entrée du passage en chicane est plus éloignée de l'axe de révolution **XX** que le siège de joint **90.**

La paroi de chicane **84** de la structure extérieure **76** est formée par des nervures annulaires **94** qui font saillie axialement vers la paroi de chicane **92** de la structure intérieure **78.** De façon similaire, la paroi de chicane **92** de la structure intérieure **78** est formée par une ou plusieurs nervures annulaires **96,** qui font saillie axialement vers la paroi de chicane **84** de la structure extérieure **76** et viennent s'interposer dans des espaces intercalaires entre les nervures annulaires **94** de la structure extérieure **76.** Les nervures annulaires **94** de la structure extérieure **76** forment une ou plusieurs gouttières additionnelles **98** situées à l'intérieur du passage en chicane **S.** Au niveau des nervures annulaires **96** de la structure intérieure **78,** la paroi de chicane **92** comporte des facettes tronconiques **922** tournées vers l'axe de révolution et des parois tronconiques **924** tournée radialement vers l'extérieur.

L'entrée **E** du passage en chicane **S** est annulaire et tournée dans une direction axiale opposée à la direction axiale de référence **D,** vers la bague extérieure de roulement **20.** L'entrée **E** est plus éloignée de l'axe de révolution **XX** que le fond **822** de la gouttière **82.** En l'occurrence, l'entrée **E** est de préférence plus éloignée de l'axe de révolution **XX** que le cercle primitif **C** défini par la rangée de corps roulants **18.**

La portion d'entrée de la paroi de chicane **92** de la structure intérieure **78** est de préférence tronconique comme illustré, de manière à converger vers un sommet plus éloigné du plan de référence de la bague extérieure **PE** que l'entrée **E.** De façon similaire, la portion d'entrée de la paroi de chicane **84** de la structure extérieure **76** est de préférence tronconique comme illustré sur les figures, de manière à converger vers un sommet plus éloigné du plan de référence **PE** de la bague extérieure que l'entrée **E.**

On constate dans ce mode de réalisation que la gouttière **82** est située partiellement au moins en recouvrement axial avec la portée de frettage **72** de la bague intérieure de roulement **36** et avec la portion de frettage **88** de la structure intérieure **78.** La paroi de chicane **84** de la structure extérieure **76** est située entièrement d'un côté du plan de référence **PI** de la bague intérieure de roulement **36,** et entièrement d'un côté de la gouttière **82,** de sorte que la gouttière **82** est située axialement entre la portion de frettage **80** de la structure extérieure **76** et la paroi de chicane **84** de la structure extérieure **76.**

Optionnellement, la portion fonctionnelle de la structure intérieure **78** peut également former un siège **99** ou un support pour un joint statique **102** coopérant directement ou indirectement avec portion médiane évasée **52** du bol de transmission **38** et/ou une interface de fixation d'une manche de protection **104** du bol de transmission **38.**

La structure intérieure **78** du dispositif d'étanchéité **66** comporte une armature **782,** de préférence métallique, qui forme la portion de frettage **72** et peut également former le siège de joint **90.** Alternativement, le siège de joint **90** peut être formé sur une pièce annulaire rapportée sur l'armature **782,** cette armature **782** pouvant être réalisée ou non dans un matériau non métallique. De préférence, la structure intérieure **78** comporte en outre une deuxième pièce **784** fixée à une portion de raccordement **785** de l'armature **782** par tout moyen approprié, notamment par collage, surmoulage ou fixation mécanique, par exemple par frettage ou par des éléments de fixation, ou encore, comme illustré sur les figures 1 à 3, par accrochage élastique. La portion de raccordement **785** de l'armature **782** est ici en saillie axiale par rapport au siège de joint **90** dans la direction de référence **D.** La deuxième pièce **784** peut être en plastique. Elle constitue un déflecteur qui forme la paroi de chicane **92** de la structure intérieure et le cas échéant le siège **99** ou le support pour joint statique **102,** voire le joint statique **102** lui-même. Dans le mode de réalisation des figures 1 et 2, une troisième pièce **786** délimite avec la deuxième pièce **784** une gouttière additionnelle **106** à proximité du siège de joint **90.**

Suivant une variante non illustrée, la pièce constituant le déflecteur peut également former le siège de joint.

Dans le mode de réalisation des figures 1 et 2, la structure intérieure **78** sert également de support à un codeur **108,** de préférence annulaire, positionné en regard d'une paroi latérale **824** ou du fond **822** de la gouttière **82,** et qui peut notamment être un codeur magnétique multipolaire ou une roue phonique. On peut ainsi, avec un capteur **110** pénétrant localement dans la gouttière **82,** lire à distance au travers de la paroi **824** de la gouttière **82** une donnée, notamment une donnée de position, codée sur le codeur **108.** La lecture peut être radiale si le codeur **108** est positionné sur la portion de frettage **88** de la structure intérieure **78,** et si le frettage est maîtrisé de manière à ne pas induire de déformation non contrôlée du codeur **108.** Alternativement, et de manière préférentielle, la lecture est axiale, comme illustré sur les figures 1 et 2, le codeur **108** étant alors supporté par une collerette annulaire plane **112** faisant saillie radialement depuis la portion de frettage **88** vers la bague extérieure de roulement **20.** Il est à noter que même en l'absence de codeur **108,** la collerette annulaire plane **112,** positionnée en regard et à faible distance de la paroi latérale **824,** peut être avantageuse, en ce qu'elle permet de confiner la graisse à l'intérieur du volume **V,** permettant le cas échéant d'éliminer l'une des lèvres de joint **86** et contribuant ainsi à une diminution du couple de frottement.

Sur la figure 3 est illustrée une variante du dispositif d'étanchéité **66** qui se distingue du mode de réalisation des figures 1 et 2 par l'absence de codeur.

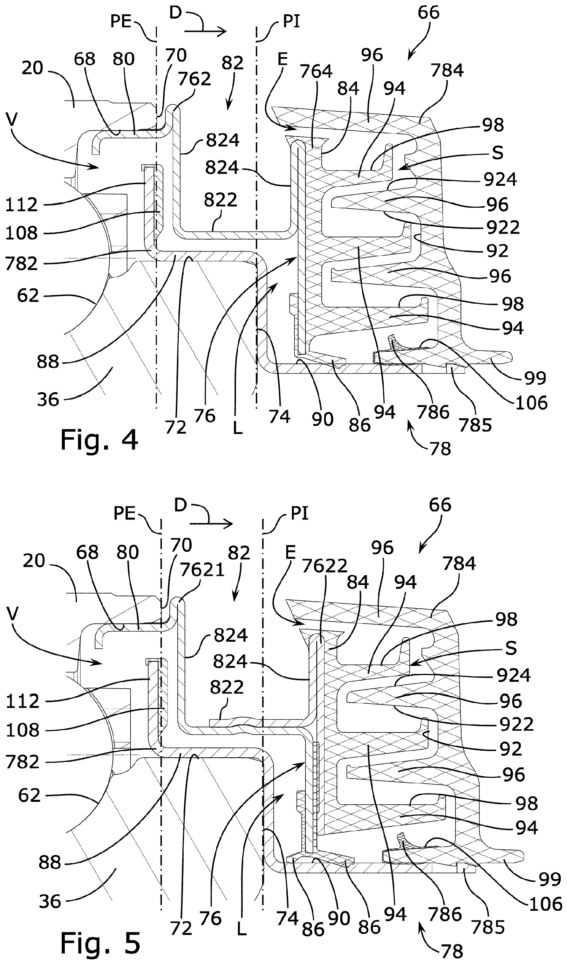

Sur la figure 4 est illustrée une autre variante, qui se distingue du mode de réalisation des figures 1 et 2 par la forme du joint, qui ne présente qu'une lèvre de joint **86.**

Sur la figure 5 est illustrée une autre variante, qui se distingue du mode de réalisation des figures 1 et 2 par le fait que l'armature **762** de la structure extérieure **76** du dispositif d'étanchéité est constituée par deux pièces **7621, 7622** fixées l'une à l'autre par tout moyen approprié, ici par frettage et accroche mécanique.

Suivant une variante non illustrée, le siège de joint peut comporter une face annulaire plane, parallèle au plan de référence de la bague intérieure, la structure extérieure du dispositif d'étanchéité comportant alors une lèvre de joint venant en appui axial contre cette face plane.

Les exemples représentés sur les figures et discutés ci-dessus ne sont donnés qu'à titre illustratif. Il est explicitement prévu que l'on puisse combiner entre eux les différents modes de réalisation illustrés pour en proposer d'autres. Le dispositif d'étanchéité décrit peut être utilisé dans d'autres applications que la protection d'un roulement de roue, et sera avantageusement applicable à tout palier lisse ou à roulement, et notamment à tout palier lisse ou à roulement dont la bague extérieure est destinée à être fixe et la bague intérieure est destinée à tourner. Dans ce contexte plus général, les chemins de roulement **22, 24, 46, 62** seront désignés chemins de guidage.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées dans le cadre des revendications en annexe.

## Revendications

1. Palier lisse ou à roulement (10) comportant au moins une bague intérieure (36) et au moins une bague extérieure (20), la bague intérieure (36) et la bague extérieure (20) étant aptes à tourner l'une par rapport à l'autre autour d'un axe de révolution (XX) du palier (10), la bague intérieure (36) présentant un chemin de guidage (62), la bague extérieure (20) présentant au moins un chemin de guidage (24) situé en regard du chemin de guidage (62) de la bague intérieure (36) et délimitant avec le chemin de guidage (62) de la bague intérieure (36) un volume intérieur (V) du palier (10), la bague intérieure (36) présentant une face d'extrémité axiale (74) tournée dans une direction axiale de référence (D) parallèle à l'axe de révolution (XX), la face d'extrémité axiale (74) étant située axialement à distance du chemin de guidage (62) de la bague intérieure (36) dans la direction de référence (D), la bague intérieure (36) présentant une portée de frettage (72) située axialement entre la face d'extrémité axiale (74) et le chemin de guidage (62) de la bague intérieure (36), le palier (10) comportant un dispositif d'étanchéité (66), le dispositif d'étanchéité (66) comportant au moins une structure extérieure (76) solidaire de la bague extérieure et une structure intérieure (78) solidaire de la bague intérieure (36), la structure extérieure (76) et la structure intérieure (78) délimitant ensemble un volume d'étanchéité (L) ouvert sur le volume intérieur (V) du palier (10), la structure intérieure (78) comportant une portion de frettage (88) frettée sur la portée de frettage (72) de la bague intérieure (36) et au moins un siège de joint (90), la structure extérieure (76) comportant au moins une lèvre de joint (86) en contact glissant contre le siège de joint (90), le siège de joint (90) et la lèvre de joint (86) obturant le volume d'étanchéité (L), le siège de joint (90) étant situé axialement à distance de la paroi d'extrémité (74) de la bague intérieure (36) dans la direction axiale de référence (D), et étant plus proche de l'axe de révolution (XX) que la portée de frettage (72), **caractérisé en ce que**
- le siège de joint (90) est tourné radialement à l'opposé de l'axe de révolution (XX) du palier (10),
- la structure intérieure (78) comporte en outre une portion de raccordement (785) en saillie axiale par rapport au siège de joint (90) dans la direction de référence (D), et un déflecteur (784), faisant saillie radialement depuis la portion de raccordement dans une direction radiale s'éloignant de l'axe de révolution (XX), et
- le déflecteur (784) forme avec la structure extérieure (76) un passage en chicane (S) débouchant dans le volume d'étanchéité (L), le passage en chicane (S) ayant une entrée (E) plus éloignée de l'axe de révolution (XX) que le siège de joint (90), le siège de joint (90) et la lèvre de joint (86) étant positionnés dans le volume d'étanchéité (L) et interposés entre le passage en chicane (S) et le volume intérieur (V) du palier (10).

2. Palier (10) selon la revendication 1, **caractérisé en ce que** le siège de joint (90) est plus proche de l'axe de révolution (XX) qu'un fond (FI) du chemin de guidage (62) de la bague intérieure (36).

3. Palier (10) selon l'une quelconque des revendications précédentes, **caractérisé en ce que** la portée cylindrique de frettage (72) de la bague intérieure (36) est tournée radialement à l'opposé de l'axe de révolution (XX) du palier (10).

4. Palier (10) selon l'une quelconque des revendications précédentes, **caractérisé en ce que** la structure intérieure (78) comporte une armature (782) formant la portion de frettage (88) et le siège de joint (90).

5. Palier (10) selon la revendication 4, **caractérisé en ce que** le déflecteur (784) est fixé à l'armature (782) par accrochage, frettage, collage, par des éléments de fixation ou tout autre moyen.

6. Palier (10) selon l'une quelconque des revendications précédentes, **caractérisé en ce que** la structure intérieure (78) comporte une portion d'étanchéité statique (99) venant en appui contre un joint statique (102) destiné à s'interposer entre la structure intérieure (78) et une pièce solidaire de la bague intérieure (36), notamment un bol de transmission (38) ou un soufflet (104) de protection d'un bol de transmission (38).

7. Palier (10) selon l'une quelconque des revendications précédentes, **caractérisé en ce que** la structure intérieure comporte un codeur (108).

8. Palier (10) selon l'une quelconque des revendications précédentes, **caractérisé en ce que** le chemin de guidage (24) de la bague extérieure (20) est un chemin de roulement, le chemin de guidage (62) de la bague intérieure (36) est un chemin de roulement, le palier (10) étant un palier à roulement comportant au moins une rangée de corps roulants (18) aptes à rouler sur le chemin de roulement (24) de la bague extérieure (20) et le chemin de roulement (62) de la bague intérieure (36) de manière à permettre un mouvement relatif de rotation entre la bague intérieure (36) et la bague extérieure (20) autour de l'axe de révolution (XX).

9. Palier selon la revendication 8, **caractérisé en ce que** le siège de joint (90) est plus proche de l'axe de révolution (XX) qu'un cercle primitif (C) défini par la rangée de corps roulants (18).

10. Dispositif de support de roue de véhicule automobile, **caractérisé en ce qu'**il comporte un palier (10) selon l'une quelconque des revendications précédentes, la bague intérieure (36) étant une bague tournante, de préférence un moyeu de roue (34) ou une bague (36) solidaire d'un moyeu de roue (34) et la bague extérieure (20) est une bague fixe présentant une interface (28) de fixation à un support de roue (30), notamment un pivot de roue.

## Patentansprüche

1. Gleit- oder Wälzlager (10), das mindestens einen Innenring (36) und mindestens einen Außenring (20) umfasst, wobei der Innenring (36) und der Außenring (20) geeignet sind, sich relativ zueinander um eine Rotationsachse (XX) des Lagers (10) zu drehen, wobei der Innenring (36) eine Führungsbahn (62) umfasst, der Außenring (20) mindestens eine Führungsbahn (24) aufweist, die gegenüber der Führungsbahn (62) des Innenrings (36) liegt und mit der Führungsbahn (62) des Innenrings (36) ein Innenvolumen (V) des Lagers (10) begrenzt, wobei der Innenring (36) eine axiale Endfläche (74) aufweist, die in einer axialen Bezugsrichtung (D) parallel zu der Rotationsachse (XX) gedreht ist, wobei die axiale Endfläche (74) in der Bezugsrichtung (D) axial von der Führungsbahn (62) des Innenrings (36) beabstandet ist, wobei der Innenring (36) einen Schrumpfsitz (72) aufweist, der axial zwischen der axialen Endfläche (74) und der Führungsbahn (62) des Innenrings (36) liegt, wobei das Lager (10) eine Dichtungsvorrichtung (66) umfasst, wobei die Dichtungsvorrichtung (66) mindestens eine mit dem Außenring fest verbundene Außenstruktur (76) und eine mit dem Innenring (36) fest verbundene Innenstruktur (78) umfasst, wobei die Außenstruktur (76) und die Innenstruktur (78) gemeinsam ein Dichtungsvolumen (L), das über dem Innenvolumen (V) des Lagers (10) offen ist, begrenzen, die Innenstruktur (78) einen Schrumpfabschnitt (88), der auf den Schrumpfsitz (72) des Innenrings (36) aufgeschrumpft ist, und mindestens einen Dichtungssitz (90) umfasst, wobei die Außenstruktur (76) mindestens eine Dichtungslippe (86) umfasst, die in Gleitkontakt mit dem Dichtungssitz (90) steht, wobei der Dichtungssitz (90) und die Dichtungslippe (86) das Dichtungsvolumen (L) verschließen, wobei der Dichtungssitz (90) in der axialen Bezugsrichtung (D) axial von der Endwand (74) des Innenrings (36) beabstandet ist und näher an der Rotationsachse (XX) als der Schrumpfsitz (72) liegt, **dadurch gekennzeichnet, dass**
- der Dichtungssitz (90) radial von der Rotationsachse (XX) des Lagers (10) weggedreht ist,
- die Innenstruktur (78) ferner einen Verbindungsabschnitt (785), der in Bezug auf den Dichtungssitz (90) in der Bezugsrichtung (D) axial vorsteht, und ein Leitblech (784), das von dem Verbindungsabschnitt in einer von der Rotationsachse (XX) wegführenden radialen Richtung radial vorsteht, umfasst und
- das Leitblech (784) mit der Außenstruktur (76) einen Ablenkdurchgang (S) ausbildet, der in das Dichtungsvolumen (L) mündet, wobei der Ablenkdurchgang (S) einen Einlass (E), der weiter von der Rotationsachse (XX) entfernt als der Dichtungssitz (90) ist, besitzt, wobei der Dichtungssitz (90) und die Dichtungslippe (86) in dem Dichtungsvolumen (L) positioniert und zwischen dem Ablenkdurchgang (S) und dem Innenvolumen (V) des Lagers (10) angeordnet sind.

2. Lager (10) nach Anspruch 1, **dadurch gekennzeichnet, dass** der Dichtungssitz (90) sich näher an der Rotationsachse (XX) als ein Boden (FI) der Führungsbahn (62) des Innenrings (36) befindet.

3. Lager (10) nach einem der vorstehenden Ansprüche,
**dadurch gekennzeichnet, dass** der zylindrische Schrumpfsitz (72) des Innenrings (36) radial von der Rotationsachse (XX) des Lagers (10) weggedreht ist.

4. Lager (10) nach einem der vorstehenden Ansprüche,
**dadurch gekennzeichnet, dass** die Innenstruktur (78) ein Gestell (782), das den Schrumpfabschnitt (88) und den Dichtungssitz (90) ausbildet, umfasst.

5. Lager (10) nach Anspruch 4, **dadurch gekennzeichnet, dass** das Leitblech (784) an dem Gestell (782) durch Einhängen, Schrumpfen, Kleben, durch Befestigungselemente oder jedes andere Mittel befestigt ist.

6. Lager (10) nach einem der vorstehenden Ansprüche,
**dadurch gekennzeichnet, dass** die Innenstruktur (78) einen statischen Dichtungsabschnitt (99), der sich an einer statischen Dichtung (102) abstützt, die dafür bestimmt ist, sich zwischen die Innenstruktur (78) und ein mit dem Innenring (36) fest verbundenes Teil, insbesondere eine Getriebeschale (38) oder einen Faltenbalg (104) einer Getriebeschale (38), einzuschieben, umfasst.

7. Lager (10) nach einem der vorstehenden Ansprüche,
**dadurch gekennzeichnet, dass** die Innenstruktur einen Codierer (108) umfasst.

8. Lager (10) nach einem der vorstehenden Ansprüche,
**dadurch gekennzeichnet, dass** die Führungsbahn (24) des Außenrings (20) eine Rollbahn ist, die Führungsbahn (62) des Innenrings (36) eine Rollbahn ist, das Lager (10) ein Wälzlager ist, das mindestens eine Reihe von Wälzkörpern (18) umfasst, die geeignet sind, um auf der Rollbahn (24) des Außenrings (20) und der Rollbahn (62) des Innenrings (36) zu rollen, um eine relative Rotationsbewegung zwischen dem Innenring (36) und dem Außenring (20) um die Rotationsachse (XX) herum zu ermöglichen.

9. Lager nach Anspruch 8, **dadurch gekennzeichnet, dass** der Dichtungssitz (90) näher an der Rotationsachse (XX) als ein Teilkreis (C), der durch die Reihe von Wälzkörpern (18) definiert wird, ist.

10. Radträgervorrichtung für ein Kraftfahrzeug, **dadurch gekennzeichnet, dass** sie ein Lager (10) nach einem der vorstehenden Ansprüche umfasst, wobei der Innenring (36) ein drehbarer Ring ist, vorzugsweise eine Radnabe (34) oder ein Ring (36), der fest mit einer Radnabe (34) verbunden ist, und der Außenring (20) ein fester Ring ist, der eine Grenzfläche (28) zur Befestigung an einem Radträger (30), insbesondere einem Radbolzen, aufweist.

## Claims

1. A plain bearing or rolling bearing (10) comprising at least one inner ring (36) and at least one outer ring (20), the inner ring (36) and the outer ring (20) being able to rotate relative to one another about an axis of revolution (XX) of the bearing (10), the inner ring (36) having a guide race (62), the outer ring (20) having at least one guide race (24) located opposite the guide race (62) of the inner ring (36) and delimiting, with the guide race (62) of the inner ring (36), an inner volume (V) of the bearing (10), the inner ring (36) having an axial end face (74) facing in a reference axial direction (D) parallel to the axis of revolution (XX), the axial end face (74) being located axially at a distance from the guide race (62) of the inner ring (36) in the reference direction (D), the inner ring (36) having a shrink-fitting bearing surface (72) located axially between the axial end face (74) and the guide race (62) of the inner ring (36), the bearing (10) comprising a sealing device (66), the sealing device (66) comprising at least an outer structure (76) secured to the outer ring and an inner structure (78) secured to the inner ring (36), the outer structure (76) and the inner structure (78) together delimiting a sealing volume (L) open on the inner volume (V) of the bearing (10), the inner structure (78) comprising a shrink-fitting portion (88) shrink-fitted onto the shrink-fitting bearing surface (72) of the inner ring (36) and at least one seal seat (90), the outer structure (76) comprising at least one seal lip (86) in sliding contact against the seal seat (90), the seal seat (90) and the seal lip (86) sealing the sealing volume (L), the seal seat (90) being located axially at a distance from the end wall (74) of the inner ring (36) in the reference axial direction (D), and being closer to the axis of revolution (XX) than the shrink-fitting bearing surface (72),
**characterized in that**
- the seal seat (90) faces radially away from the axis of revolution (XX) of the bearing (10),
- the inner structure (78) further comprises a connecting portion (785) protruding axially relative to the seal seat (90) in the reference direction (D), and a deflector (784) protruding radially from the connecting portion in a radial direction away from the axis of revolution (XX), and
- the deflector (784) forms, with the outer structure (76), a chicane passage (S) opening into the sealing volume (L), the chicane passage (S) having an inlet (E) farther from the axis of revolution (XX) than the seal seat (90), the seal seat (90) and the seal lip (86) being positioned in the sealing volume (L) and inserted between the chicane passage (S) and the inner volume (V) of the bearing (10).

2. The bearing (10) according to claim 1, **characterized in that** the seal seat (90) is closer to the axis of revolution (XX) than a bottom (FI) of the guide race (62) of the inner ring (36).

3. The bearing (10) according to either one of the preceding claims, **characterized in that** the cylindrical shrink-fitting bearing surface (72) of the inner ring (36) faces radially away from the axis of revolution (XX) of the bearing (10).

4. The bearing (10) according to any one of the preceding claims, **characterized in that** the inner structure (78) comprises a frame (782) forming the shrink-fitting portion (88) and the seal seat (90).

5. The bearing (10) according to claim 4, **characterized in that** the deflector (784) is attached to the frame (782) by fastening, shrink-fitting, bonding, by fastening elements or any other means.

6. The bearing (10) according to any one of the preceding claims, **characterized in that** the inner structure (78) comprises a static sealing portion (99) bearing against a static seal (102) intended to be inserted between the inner structure (78) and a part secured to the inner ring (36), in particular a transmission bowl (38) or a bellows (104) for protecting a transmission bowl (38).

7. The bearing (10) according to any one of the preceding claims, **characterized in that** the inner structure comprises an encoder (108).

8. The bearing (10) according to any one of the preceding claims, **characterized in that** the guide race (24) of the outer ring (20) is a raceway, and the guide race (62) of the inner ring (36) is a raceway, the bearing (10) being a rolling bearing comprising at least one row of rolling bodies (18) able to roll on the raceway (24) of the outer ring (20) and the raceway (62) of the inner ring (36) so as to allow relative movement of rotation between the inner ring (36) and the outer ring (20) about the axis of revolution (XX).

9. The bearing according to claim 8, **characterized in that** the seal seat (90) is closer to the axis of revolution (XX) than a pitch circle (C) defined by the row of rolling bodies (18).

10. A motor vehicle wheel support device, **characterized in that** it comprises a bearing (10) according to any one of the preceding claims, the inner ring (36) being a rotating ring, preferably a wheel hub (34) or a ring (36) secured to a wheel hub (34), and the outer ring (20) being a fixed ring having an interface (28) for fastening to a wheel support (30), in particular a wheel pivot.
